# EUROPÄISCHE PATENTSCHRIFT

(11) **EP 1 251 923 B1**
(45) Veröffentlichungstag und Bekanntmachung des Hinweises auf die Patenterteilung: **27.10.2004**
(21) Anmeldenummer: 01905670.4
(22) Anmeldetag: 18.01.2001
(51) Int. Cl.: B01D 19/04

(54) **FORMULIERUNG UND HERSTELLPROZESS EINER VERBINDUNG ZUR SCHAUMVERMINDERUNG**
FORMULATION AND PRODUCTION PROCESS OF A COMPOUND FOR REDUCING FOAM
FORMULATION ET PROCEDE DE PRODUCTION D'UN COMPOSE REDUCTEUR DE MOUSSE

(30) Priorität: 18.01.2000 DE 10001945
(43) Veröffentlichungstag der Anmeldung: 30.10.2002
(73) Patentinhaber: GE Bayer Silicones GmbH & Co. KG, 40699 Erkrath (DE)
(72) Erfinder: HUGGINS, John, 51373 Leverkusen (DE); KROPFGANS, Martin, 51519 Odenthal-Glöbusch (DE); ROOS, Christopher, 51065 Köln (DE)
(86) Internationale Anmeldenummer: PCT/EP2001/000572
(87) Internationale Veröffentlichungsnummer: WO 2001/052964

(56) Entgegenhaltungen:
- EP-A- 0 163 398
- EP-A- 0 169 500

## Beschreibung

Die Erfindung betrifft Entschäumerverbindungen mit hervorragender schaumbrechender und schaumunterdrückender Wirkung, die sich durch hervorragende Persistenz auch bei starker mechanischer Beanspruchung, erhöhter Temperatur, unter stark alkalischen Bedingungen, wie z. B. in stark schäumenden Waschmittelformulierungen auszeichnen.

Es ist bekannt, dass Zusätze von geringen Mengen verschiedener siliconhaltiger Mischungen zu wässrigen oder auch organischen Flüssigkeiten deren Schaumbildung vermindern oder unterdrücken können. In diesem Zusammenhang hat sich gezeigt, dass bei der Herstellung dieser siliconehaltigen Entschäumer- Verbindungen geringe Veränderungen der Herstellung, bzw. der Zusammensetzung, einen starken Einfluss auf deren Wirksamkeit haben können. Im allgemeinen setzen sich Entschäumerformulierungen aus Siliconölen (meistens Polydimethylsiloxanen) ggfs. zusätzlich Siliconharzen sowie anorganischen Füllstoffen, wie Kieselsäuren (Silica), Silikaten oder anderen anorganischen Pigmenten, wie TiO₂ etc. zusammen. Um eine Sedimentation des Füllstoffes zu verhindern, erhitzt man diese Compounds für einen hinreichenden Zeitraum auf 100 bis 300 °C während oder nach dem Mischprozess. Dieser Stabilisierung kann durch Zusatz von basischen (US 3 560 401) oder sauren (US 3 235 509) Katalysatoren, die zur Umlagerung, d. h. Polymerisation bzw. Depolymerisation der Si-O-Bindungen dienen, gefördert werden. Eine Verbesserung der entschäumenden Wirkung lässt sich durch gleichzeitige Verwendung von Siliconöl, Siliconharz und Füllstoff in Entschäumer-Mischungen erzielen (US 4 145 308). Eine weitere Verbesserung ergibt sich aus der Verwendung zweier Siliconöle unterschiedlicher Viskosität (EP 163 398, US 4 486 336) z. B. 10000-200000 cSt und 100-5000 cSt.

Aus der EP-A-0163398 sind Entschäumermischungen bekannt, die aus einem hochviskosen Polydimethylsiloxan (A), niedrigviskosen Polydimethylsiloxan (B), einem MQ-Siticonharz (C) und amorpher Kieselsäure (D) bestehen.

Zur Steigerung der Löslichkeit hat man Alkylcarbonsäuren (US 3 076 768) bzw. handelsübliche Emulgatoren vorgeschlagen oder setzt Polyoxyalkylensiloxane zur besseren Dispergierung in wässrigen Systemen ein.

Obwohl es nach diesem Stand der Technik schon gelungen war, die entschäumende Wirkung zu verbessern, blieb die Wirkung dieser Formulierungen insbesondere unter extremen Bedingungen, wie sehr hohen oder niedrigen pH-Werten, starker mechanischer Beanspruchung oder erhöhter Temperatur zeitlich sehr begrenzt. Damit war deren Wirksamkeit in speziellen Einsatzbereichen limitiert.

### Gegenstand der Erfindung

Bei der Bereitstellung von Entschäumern für technische Prozesse unter extremen Bedingungen, wie die der Papierherstellung oder von Waschprozessen bei hohen Temperaturen und extremen pH-Werten fehlen heute immer noch ausreichend wirksame Entschäumer.

Diese Erfindung beschreibt neue, entschäumend wirkende Mischungen, die insbesondere unter extremen Bedingungen, wie pH-Wert (kleiner 2 bzw. größer 10) oder Temperatur 80-120 °C über eine hervorragende Persistenz ihrer entschäumenden Wirkung verfügen.

Dabei wurden insbesondere die vorteilhaften Eigenschaften der nachfolgenden, erfindungsmäss hergestellten Mischungen erkannt:
Silicon-Entschäumer-Mischungen, bestehend aus:
   a) Umsetzungsprodukt, erhältlich durch Umsetzung von:
      a1) 60 bis 99 Gewichtsteilen mindestens eines Polysiloxanes, ausgewählt aus cyclischen Diorganosiloxanen **(i)** und /oder **(ii)** α, ω-Triorganosilyl-endgestoppte Polydiorganosiloxane und/oder **(iii)** α, ω-Polydiorgano-siloxandiolen, 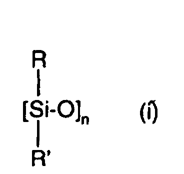 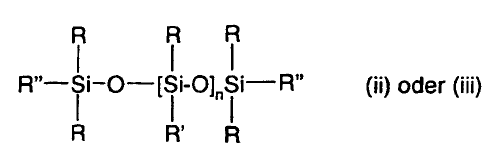 wobei
         die organischen Gruppen R, R', R" in den Formeln (i) bis (iii) Reste typischer Polyorganosiloxane darstellen, nämlich H, OH oder Alkylreste mit 1 bis 12 Kohlenstoffatomen oder Arylreste oder Alkenylreste oder Halogenalkylreste sein können und im Falle von (iii) zusätzlich als Hydroxyalkylrest vorliegt, und n = 2 bis 7000 ist,
      a2) 5-20000 ppm bezogen auf a) eines für die Siloxanpolymerisation geeigneten basischen oder sauren Katalysators oder deren Reaktionsprodukte mit cyclischen, triorganosiloxan- oder hydroxyterminierten Siloxanen oder Mischungen derselben, sowie
      a3) 1 bis 20 Gewichtsteilen eines anorganischen Füllstoffes, der eine Oberfläche von 50 bis 1000 m²/g (bestimmt nach BET), aufweist,
   b) 1 bis 30 Gewichtsteile eines linearen Polydiorganosiloxans mit einer Viskosität von 500 Pa.s bis 70.000 Pa.s bei 23°C bei D= 1 sec^-1 oder eine Mischung aus Polyorganosiloxanen mehrerer Polyorganosiloxane, die diese Viskosität ergeben,
   c) bis zu 20 Gewichtsteile eines MQ-Siliconharzes das sich aus M=R₃Si-O_{1/2} und Q=SiO_{4/2}, Gruppen zusammensetzt,
   d) 0,05 bis 10 Gewichtsteile eines Paraffines, eines Fettalkoholes, einer Fettsäure, eines Fettsäureesters oder eines Alkylpolyethers mit C₅-C₃₂-Kette,
   e) 1 bis 20 Gewichtsteile eines geeigneten Hydrophobierungsagens.

Die Komponente a1) umfasst 60 bis 99 Gewichtsteile mindestens eines Polysiloxanes ausgewählt aus cyclischen Diorganosiloxanen (i) (z. B. Octamethylcyclotetrasiloxan, Decamethylcyclopentasilxan) und/oder (ii) alpha,omega-Triorganosilyl-endgestoppte Polydiorganosiloxane und/oder (iii) alpha,omega-Polydiorgano-siloxandiolen, wobei die organischen Gruppen R, R', R" in den Formeln (i) bis (iii) Reste typischer Polyorganosiloxane darstellen, nämlich H, OH oder Alkylreste mit. 1 bis 12 Kohlenstoffatomen, wie Methyl-, Ethyl-, Propyl, Cyclohexyl, Cyclohexyl-ethyl, Limonyl, Ethylidennorbornen oder Arylreste, wie Phenyl-, Methylphenyl-, Ethylphenyl- oder Alkenylreste, wie Vinyl-, Allyl oder Halogenalkylreste, wie 3,3,3- Trifluoropropyl, Chlorpropyl sein können und im Falle von (iii) zusätzlich als Hydroxylrest vorliegt

Die Komponente a2) umfasst 5-20000 ppm bezogen auf a) eines für die Siloxanpolymerisation geeigneten basischen oder sauren Katalysators, vorzugsweise KOH, CsOH, NR₄OH, RSO₃H oder deren Reaktionsprodukte mit cyclischen, triorganosiloxan- oder hydroxyterminierten Siloxanen oder Mischungen derselben,

Die Komponente a3) umfasst 1 bis 20 Gewichtsteile eines anorganischen Füllstoffes, wie Kieselsäuren (Silica) oder Al-, Ca- bzw. andere Alkali oder Erdalkalisilikate, Alkalioder Erdalkalisulfate oder deren Carbonate, andere Pigmente, wie Russe, TiO₂, Bentonite, vorzugsweise feinverteilter, amorpher Kieselsäure, die eine Oberfläche von 50 bis 1000 m/g, vorzugsweise von 100 bis 300 m/g (bestimmt nach BET), aufweist,

Die Komponente b) umfasst 1 bis 30 Gewichtsteile eines linearen Polydiorganosiloxans mit einer Viskosität von 500 Pa.s bis 70.000 Pa.s bei 23 °C mit einem Schergeschwindigkeitsgefälle D = 1 sec⁻¹ oder eine Mischung . aus Polyorganosiloxanen mehrerer Polyorganosiloxane, die diese Viskosität ergeben.

Die Komponente c) umfasst bis zu 20 Gewichtsteile eines MQ-Siliconharzes das sich aus M = R₃Si-O_{1/2} und Q = SiO_{4/2}, Gruppen zusammensetzt.

Die Komponente d) umfasst 0,05 bis 10 Gewichtsteile eines Paraffines, eines Fettalkoholes oder einer Fettsäure oder eines Alkylpolyethers mit C₅-C₃₂-Kette.

Die Komponente e) umfasst 1 bis 20 Gewichtsteile eines geeigneten Hydrophobierungsagens, wie kurzkettiger hydroxyterminierter Siloxane, Silanole, Alkoxysilane bzw. Siloxane oder Silazane.

Zur Herstellung der erfindungsgemäßen Entschäumer-Compounds können nahezu alle Mischaggregate verwendet werden, die das Homogenisieren von Pasten des Viskositätsbereiches 1- 50000 Pa.s erlauben, die ggf. gleichzeitig thixotrop sein können und eine Fliessgrenze aufweisen können. Das sind Rührtöpfe aus Glas oder Edelstahl, Zweiwellenkneter, Dissolver oder Henschelmischer.

Diese Geräte müssen beheizbar sein und die Möglichkeit bieten, die Mischungen zu evakuieren.

Bevorzugt erfolgt die Herstellung des in der erfindungsgemäßen Entschäumermischung enthaltenen Umsetzungsproduktes a), in dem man zunächst die Komponenten a1) und a2) bis zur Äquilibrierung umsetzt und anschließen mit der Komponente a3) umsetzt.

In diesem Sinne mischt man zweckmäßig die Komponenten a1) und a2), wobei man sie auf 50 bis 300 °C erhitzt. Als Reaktionsdauer wählt man eine Zeit, die es erlaubt, das Polymerisations- bzw. Äquilibierungsgleichgewicht zu erreichen, d. h. 1-4 h Reaktionszeit.

Die Mischung der Komponenten a1) und a2) ist vorzugsweise so zu wählen, dass eine Viskosität von 10 bis 100.000 mPa.s bei 23 °C, besonders bevorzugt 15.000 bis 90.000 mPa.s bei 23 °C, erhalten wird.

Durch sorgfältige Einarbeitung des Füllstoffes a3), der so zu wählen ist, dass es zu einer Neutralisation des jeweiligen Katalysators a2) kommt und die Äquilibrierungsreaktion abgebrochen wird. Im Falle eines basischen Katalysators ist ein Füllstoff mit sauren Eigenschaften, wie pyrogene Kieselsäure, zu verwenden. Nach dem Zumischen der Komponente b) entsteht eine hochviskose Masse, die eine bessere Dispergierung des Füllstoffes aufweist. Im Verlauf der Zugabe der weiteren Komponenten verdünnt man den Kieselsäure-Siloxan-Compound erneut.

Die Einarbeitung der Komponenten b), c), d) und e) erfolgt bei 50 bis 300 °C entweder in Reihenfolge b), c) und d) oder über eine Mischung aus b) und c) woraufhin d) im Anschluss getrennt, zeitlich versetzt zugegeben wird.

Die Einarbeitung der Komponente d) bei 50 bis 300 °C, führt zu einer Absenkung der Mischungsviskosität, die der Komponente e) senkt die Viskosität nochmals ab und verbessert die Lagerstabilität bezgl. der Mischungsviskosität. Dies erleichtert eine spätere Verarbeitung der entschäumend wirkenden Mischung.

Zum Abschluss trennt man bei 100 bis 300 °C optional die verdampfbaren Anteile ab. Amorphe Kieselsäuren (Silica) sind von diversen Anbietern kommerziell erhältlich und werden hauptsächlich in drei Typen angeboten, die sich in der Art ihrer Herstellung unterscheiden: Kieselgel, Fällungskieselsäure und pyrogene Kieselsäuren (z. B. Aerosil).

Kieselgel und Fällungskieselsäuren erhält man z. B. über die Ansäuerung einer Lösung von Natriumsilikat. Das entsehende SiO₂-Gel wird im Anschluss mechanisch aufgebrochen, von Salz und Säure freigewaschen und getrocknet. Die vorzugsweise verwendete pyrogene Kieselsäure erzeugt man über sogen. Flammhydrolyse, bei der man sehr feinteilige, oberflächenreiche Strukturen erzeugen kann.

Durch Behandlung mit geeigneten oberflächenmodifizierenden Substanzen e), wie Hexamethyldisilazan oder Cyclosiloxanen, wie D4 (Octamethylcyclotetrasiloxan) können Kieselsäuren hydrophobiert werden. Dieser Schritt kann vorab oder beim Mischprozess ('in-situ') erfolgen. Die Mengen liegen bei 10-100%, insbesondere bei 100% der eingesetzten SiO₂-Menge.

Vorzugsweise wird eine hydrophobierte oder teilhydrophobierte . Kieselsäure verwendet.

### Testmethode:

Die Praxisprüfungen erfolgen oft in genormten Waschprozessen, bei denen Temperaturen, Waschmittelgehalt sowie Bewegungsfolgen der Wäschestücke festgelegt sind. Die Schaumbildung ist u. a. stark von der Intensität und Häufigkeit der eingetragenen Bewegung, d. h. Grenzflächenänderung Luft/Wasser abhängig. Um die Cyclen zu standardisieren wurde der folgende Aufbau zur Bestimmung der entschäumende Wirkung gewählt.

Die Anordnung besteht aus einem Messzylinder für die Bestimmung der Schaumhöhe und einem Umlauf mit Pumpe.

Zylinderhöhe 48 cm, Füllhöhe 22 cm, Zylinderdurchmesser 9 cm.

Aus dem heizbaren Messzylinder mit Bodenauslass lässt man mittels einer Pumpe die Testflüssigkeit derart umlaufen, dass diese in die obere Öffnung des Messzylinders zurückgeführt wird.

Die Pumpe führt die Testflüssigkeit mit 6 Vmin vom unteren Segment zu der oberen Öffnung des Messzylinders zurück.

Die Untersuchungen führte man mit 1 l einer 0,5% Lösung von käuflichem Ariel Futur (handelsübliches Waschmittel) in Wasser (übliche Bereiche sind auch 0,1 bis 3 Gew.-%) durch. Nach dem Aufheizen auf 85-90 °C setzte man 10 mg Entschäumer-Compound aus den nachfolgenden Beispielen zu. Typischerweise misst man pH-Werte von ca. 12.

Der nach Einschalten der Pumpe sich ausbildende Schaum wurde bezgl. seiner mittleren Schaumhöhe gegen die Umpumpzeit registiert.

### Beispiele

### Beispiel 1a (Vergleichsbeispiel EP 163 398 S. 14 Bsp. 13)

Man vermischt 45 Gew.-% Trimethylsilyl-endgestopptes Polydimethylsiloxan (PDMS) 100000 cSt, 42,5% PDMS, der Viskosität 1000 cSt, 5% MQ Harz (M : Q = 0,6 : 1 bis 1 : 1) M = Me₃SiO_{0,5}, Q = SiO₂, 7,5% Fällungskieselsäure Oberfläche 300 m²/g Vormischung aus a2) bis b) bei 200 °C in einem Glas-Sulfiertopf (zylinderförmiger Topf incl. Deckel +Rührdurchführung) mit einer Dissolverscheibe bei 800 Upm Entgasung bei 4 h unter Vakuum von 400 mm Hg.

Für die anschliessende Prüfung in der Testapparatur mischt man diese Silicon-Mischung in ein Polyethylengykol des Typs PEG 8000 Fa. Aldrich zu 5 Gew.-%, lässt diese Mischung abkühlen, granuliert und klassiert ein Pulver der Teilchengrösse 425-1400 µm. Davon gibt man 200 mg zu einer 0,5%-igen Lösung aus Ariel Futur, welches in der Testapparatur bewertet wird.

Es kommt zu einem relativ schnellen Schaumanstieg in 5 min auf über 120 mm.

### Beispiel 1b (Vergleichsbeispiel)

Kommerzieller Entschäumer DC 2-4248 S (Dow Corning), der einen ähnlichen Stand wie 1 a repräsentiert. Ergebnis in Tab. 1

### Beispiel 2 nicht erf.-gem. kein Harz, kein hochviskoses PDMS b)

In einem Glas-Sulfiertopf mit Dissolverscheibe werden 88,2 Gew.-% einer Mischung aus Octamethylcyclotetrasiloxan und alpha,omega-Trimethylsilyl-endgest. Polydimethylsiloxan, das 0,068 Gew.-% CsOH beeinhaltet, bei 150 °C äquilibriert. Nach Erreichen einer Viskosität von 20.000 mPa.s gibt man 5,7 Gew.-% einer pyrogenen Kieselsäure vom Typ R 812 (BET-Oberfläche: 260 m/g) zu und vermischt diese mit dem Polymer. Im Anschluss dosiert man nacheinander 0,4 Gew.-% einer Fettsäure TI 0,5 (Henkel) und 5,7 Gew.-% eines alpha,omega-Polydimethytsiloxandiols. Nach 1 h Rühren entfernt man die verdampfbaren Bestandteile im Vakuum bei 150 °C und 12 mbar. Anschliessend mischt man diese Silicon-Mischung in ein Polyethylengykol wie in Beispiel 1. Ergebnis in Tab. 1

### Beispiel 3 (keine Polymerisation/Äquilibrierung)

In einem Glas-Sulfiertopf gibt man zu 64,8 Gew.-% eines alpha,omega-Trimethylsilylendgest. Polydimethylsiloxans einer Viskosität von 20 Pa.s 5,7 Gew.-% einer pyrogenen Kieselsäure R 812 (BET-Obertläche: 260 m²/g) und rührt diese in das Polymer ein.

Im Anschluss dosiert man nacheinander 14,1 Gew.-% einer Lösung eines MQ- Harzes in einem alpha,omega-Trimethylsilyl-endgest. Polydimethylsiloxan (Viskosität 50 mPa.s), 9,4 Gew.-% eines Trimethylsilyl-endgest. Polydimethylsiloxans (Viskosität 30 Pa.s), 0,4 Gew.-% einer Fettsäure TI 0,5 (Henkel) und 5,7 Gew.-% eines alpha,omega-Polydimethylsiloxandiols. Nach 1 h Rühren entfernt man die verdampfbaren Bestandteile im Vakuum während 1 h bei 12 mbar 150 °C. Ergebnis in Tab. 1 .

Beispiel 3 zeigt, dass das Weglassen der erfindungsgemäßen Umsetzung von a1) bis a3) zu geringerer Entschäumungswirksamkeit führt.

### Beispiel 4 erfindungsgemäss

In einem Glas-Sulfiertopf versetzt man 64,8 Gew.-% einer Mischung aus Octamethylcyclotetrasiloxan und alpha,omega-Trimethylsilylendgest. Polydimethylsiloxan (3 mPa.s) mit 0,068 Gew.-% CsOH. Diese Mischung polymerisiert/äquilibriert man bei 150 °C. Nach Erreichen einer Viskosität von 20 Pa.s dosiert man 5,7 Gew.-% einer pyrogenen Kieselsäure R 812 (BET-Oberfläche: 260 m²/g) zu und rührt diese homogen in das Polymer ein. Anschließend fügt man nacheinander 14,1 Gew.-% einer Lösung eines MO-Harzes in einem alpha,omega-Trimethylsilylendgest. Polydimethylsiloxan (Viskosität 50 mPa.s), 9,4 Gew.-% eines Trimethylsilylendgest. Polydimethylsiloxans (Viskosität 30 000 Pa.s), 0,4 Gew.-% einer Fettsäure TI 0,5 (Henkel) Ölsäure sowie 5,7 Gew.-% eines alpha,omega-Polydirnethylsiloxandiols (Viskosität 30 mPa.s) zu und vermischt alte Komponenten homogen miteinander. Nach 1 h Rühren entfernt man die verdampfbaren Bestandteile im Vakuum während 1 h bei 150 °C und 12 mbar. Ergebnis in Tab. 1

Beispiel 4 zeigt, dass die erfindungsgemäße Zusammensetzung die Schaumbildung früher und wirksamer unterdrückt als die Zusammensetzungen aus den Beispielen 1-3.

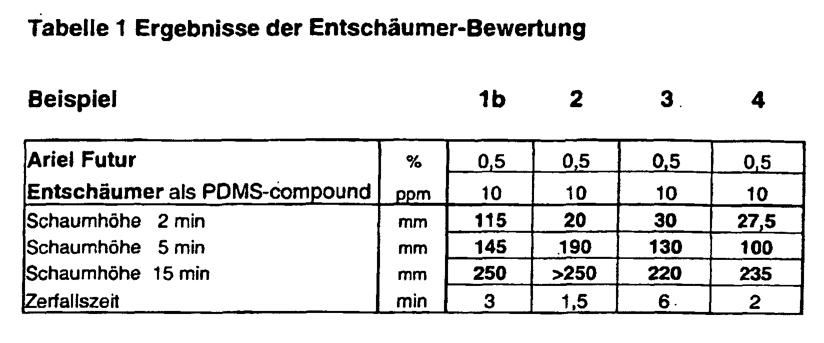

## Patentansprüche

1. Silicon-Entschäumer-Mischungen, bestehend aus:
a) Umsetzungsprodukt, erhältlich durch Umsetzung von:
a1 ) 60 bis 99 Gewichtsteilen mindestens eines Polysiloxanes, ausgewählt aus cyclischen Diorganosiloxanen **(i)** und /oder **(ii)** α, ω-Triorganosilylendgestoppte Polydiorganosiloxane und/oder **(iii)** α, ω-Polydiorganosiloxandiolen, 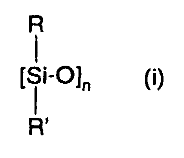 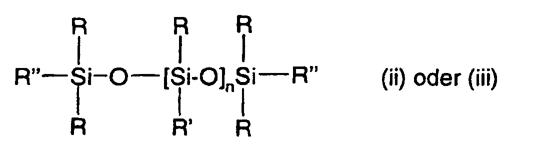 wobei
die organischen Gruppen R, R', R" in den Formeln (i) bis (iii) Reste typischer Polyorganosiloxane darstellen, nämlich H, OH oder Alkylreste mit 1 bis 12 Kohlenstoffatomen oder Arylreste oder Alkenylreste oder Halogenalkylreste sein können und im Falle von (iii) zusätzlich als Hydroxyalkylrest vorliegt, und n = 2 bis 7000 ist,
a2) 5-20000 ppm bezogen auf a) eines für die Siloxanpolymerisation geeigneten basischen oder sauren Katalysators oder deren Reaktionsprodukte mit cyclischen, triorganosiloxan- oder hydroxyterminierten Siloxanen oder Mischungen derselben, sowie
a3) 1 bis 20 Gewichtsteilen eines anorganischen Füllstoffes, der eine Oberfläche von 50 bis 1000 m²/g (bestimmt nach BET), aufweist,
b) 1 bis 30 Gewichtsteile eines linearen Polydiorganosiloxans mit einer Viskosität von 500 Pa.s bis 70.000 Pa.s bei 23°C bei D= 1 sec^-1 oder eine Mischung aus Polyorganosiloxanen mehrerer Polyorganosiloxane, die diese Viskosität ergeben,
c) bis zu 20 Gewichtsteile eines MQ-Siliconharzes das sich aus M=R₃Si-O_{1/2} und Q=SiO_{4/2}, Gruppen zusammensetzt,
d) 0,05 bis 10 Gewichtsteile eines Paraffines, eines Fettalkoholes, einer Fettsäure, eines Fettsäureesters oder eines Alkylpolyethers mit C₅-C₃₂-Kette,
e) 1 bis 20 Gewichtsteile eines geeigneten Hydrophobierungsagens.

2. Verfahren zur Herstellung der Mischung nach Anspruch 1, bei dem man die Komponenten a1) und a2) mischt und auf 50 bis 300°C erhitzt, nach Erreichen des Äquilibierungs-/Polymerisationsgleichgewichtes die Komponente a3) in dem Sinne zugibt, daß der Katalysator a2) neutralisiert und die Umlagerungsreaktion beendet wird und anschließend die restlichen Komponenten b) bis e) zuführt und die Mischung unter Vakuum von verdampfbaren Bestandteilen befreit.

3. Verfahren nach Anspruch 2, bei dem man die Komponenten a1) und a2) so auswählt, daß eine Viskosität von 10 bis 100 Pa.s bei 23°C nach der Polymerisation / Äquilibrierung erhalten wird.

4. Verfahren nach Anspruch 3, bei dem man die Komponenten a1) und a2) so auswählt, daß eine Viskosität von 15 bis 90 Pa.s bei 23°C nach der Polymerisation / Äquilibrierung erhalten wird.

5. Verfahren nach Anspruch 2, **gekennzeichnet durch** Einarbeitung eines Füllstoffes a3), der zur Neutralisation des Siloxanes aus a1) und Katalysator a2) führt.

6. Verfahren nach Anspruch 2-5, bei dem die verwendeten Katalysatoren KOH, CsOH, Na-,K-, Cs-Siloxanolat, Ammoniumhydroxide, Phosphoniumhydroxide, Sulfonsäuren, Schwefelsäure und andere übliche Äquilibrierungskatalysatoren sind.

7. Verfahren nach Anspruch 2-6, in dem nach Zugabe von a3) ein gelöstes Harz mit M- und Q-Einheiten (MQ-Harz) eingearbeitet wird.

8. Verfahren nach Anspruch 2-7, bei dem die nachträglich eingearbeiteten Komponenten b) und e) 5- 50 Gew. % der Summe aus den Komponenten a1) bis a3) betragen.

9. Verfahren nach Anspruch 2-8, bei dem die Komponente e) ein mono- oder dihydroxyterminiertes Polydiorganosiloxan mit einem Polymerisationsgrad von 2-10 ist.

10. Formulierung für eine Entschäumermischung nach Anspruch 1, in der diese in eine flüssige oder niedrigschmelzende, wasserlösliche Komponente zu 1-50 Gew.% eingemischt wird.

11. Formulierung nach Anspruch 10, in der die niedrigschmelzende Komponente für die Entschäumermischung nach Anspruch 1 ein Polyether ist und das Gemisch aus der Entschäumermischung nach Anspruch 1 und des Polyethers für die Anwendung in eine granulierte Form gebracht wird.

12. Formulierung nach Anspruch 10, in der die flüssige oder niedrig-schmelzende Komponente für die Entschäumermischung nach Anspruch 1 ein Phenylsiloxan, amino- oder epoxyfunktionales Siloxan, Fluoralkylsiloxan, Mineralöl, Polyethersiloxan, Harnstoff oder nicht vemetzte oder teilvernetzbare Siliconkautschuke sind.

13. Verwendung der Entschäumermischungen oder Formulierungen nach Anspruch 1 oder 10-12 in Papier-Pulpen, Waschmitteln, bei der Klärschlamm-, Betonentschäumung oder bei Jet- Dyeing-Prozessen.

## Claims

1. Silicone antifoam mixtures consisting of:
a) reaction product obtainable by reaction of:
a1) 60 to 99 parts by weight of at least one polysiloxane selected from cyclic diorganosiloxanes **(i)** and/or **(ii)** α,ω-triorganosilyl-terminated polydiorganosiloxanes and/or **(iii)** α,ω-polydiorganosiloxanediols 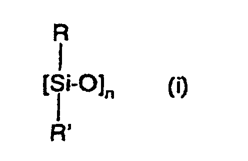 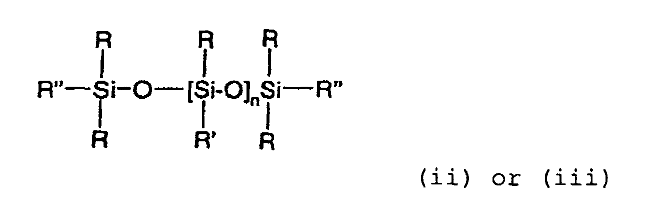 in which
the organic groups R, R', R" in the formulae (i) to (iii) represent radicals of typical polyorganosiloxanes, namely H, OH or alkyl radicals having 1 to 12 carbon atoms or may be aryl radicals or alkenyl radicals or halogenoalkyl radicals and, in the case of (iii) may additionally be present as a hydroxyalkyl radical, and n is 2 to 7 000,
a2) 5-20 000 ppm, based on a), of a basic or acidic catalyst suitable for the siloxane polymerization or of the reaction products thereof with cyclic, triorganosiloxane- or hydroxy-terminated siloxanes or mixtures thereof, and
a3) 1 to 20 parts by weight of an inorganic filler which has a surface area of 50 to 1 000 m²/g (determined according to BET),
b) 1 to 30 parts by weight of a linear polydiorganosiloxane having a viscosity of 500 Pa.s to 70 000 Pa.s at 23°C at D = 1 sec⁻¹ or a mixture of polyorganosiloxanes or a plurality of polyorganosiloxanes which give this viscosity,
c) up to 20 parts by weight of an MQ silicone resin which is composed of M = R₃Si-O_{1/2} and Q = SiO_{4/2} groups,
d) 0.5 to 10 parts by weight of a paraffin, of a fatty alcohol, of a fatty acid, of a fatty ester or of an alkylpolyether having a C₅-C₃₂-chain,
e) 1 to 20 parts by weight of a suitable water repellent.

2. Process for the preparation of the mixture according to Claim 1, in which the components a1) and a2) are mixed and are heated to 50 to 300°C, the component a3) is added so as to neutralize the catalyst a2) after the equilibrium/polymerization equilibrium has been reached, and the rearrangement reaction is terminated and then the remaining components b) to e) are fed in and the mixture is freed from vaporizable constituents in vacuo.

3. Process according to Claim 2, in which the components a1) and a2) are selected so that a viscosity of 10 to 100 Pa.s at 23°C is obtained after the polymerization/equilibrium.

4. Process according to Claim 3, in which the components a1) and a2) are selected so that a viscosity of 15 to 90 Pa.s at 23°C is obtained after the polymerization/equilibrium.

5. Process according to Claim 2, **characterized by** incorporation of a filler a3) which leads to the neutralization of the siloxane obtained from a1) and catalyst a2).

6. Process according to Claims 2-5, in which the catalysts used are KOH, CsOH, Na, K or Cs siloxanolate, ammonium hydroxides, phosphonium hydroxides, sulphonic acids, sulphuric acid and other customary equilibration catalysts.

7. Process according to Claims 2-6, in which a dissolved resin having M and Q units (MQ resin) is incorporated after addition of a3).

8. Process according to Claims 2-7, in which the subsequently incorporated components b) and e) account for 5-50% by weight of the sum of the components a1) to a3).

9. Process according to Claims 2-8, in which the component e) is a mono- or dihydroxyl-terminated polydiorganosiloxane having a degree of polymerization of 2-10.

10. Formulation for an antifoam mixture according to Claim 1, in which this is mixed in an amount of 1-50% by weight into a liquid or low-melting, watersoluble component.

11. Formulation according to Claim 10, in which the low-melting component for the antifoam mixture according to Claim 1 is a polyether and the mixture of the antifoam mixture according to Claim 1 and of the polyether is brought into a granulated form for use.

12. Formulation according to Claim 10, in which the liquid or low-melting component for the antifoam mixture according to Claim 1 is a phenylsiloxane, amino- or epoxy-functional siloxane, fluoroalkylsiloxane, mineral oil, polyethersiloxane, urea or an uncrosslinked or partly crosslinkable silicone rubber.

13. Use of the antifoam mixtures or formulations according to Claims 1 or 10-12 in paper pulp, detergents, in the defoaming of sewage sludge, concrete defoaming or in jet dyeing processes.

## Revendications

1. Silicones antimousses mélangés, consistant en :
a) un produit obtenu par réaction de :
a1) 60 à 99 parties en poids d'au moins un polysiloxane choisi parmi les diorganosiloxanes cycliques (i) et/ou (ii), les polydiorganosiloxanes à groupes terminaux α, ω-triorganosilyle et/ou (iii) les α, ω -polydiorganosiloxane-diols, 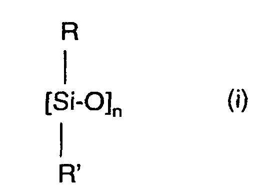 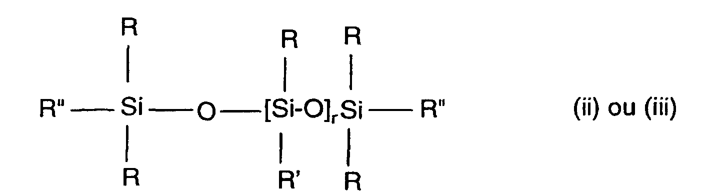 pour lesquels
les groupes organiques R, R', R" des formules (i) à (iii) sont des radicaux de polyorganosiloxanes typiques, à savoir H, OH ou des groupes alkyle en C₁-C₁₂ ou des groupes aryle, ou des groupes alcényle, ou des groupes halogénoalkyle et en outre, dans le cas de la formule (iii), des groupes hydroxyalkyle et
n = 2 à 7 000,
a2) 5 à 20 000 ppm, par rapport à a), d'un catalyseur basique ou acide approprié à la polymérisation des siloxanes ou de ses produits de réaction avec des siloxanes cycliques, à groupes terminaux triorganosiloxane ou hydroxy, ou leurs mélanges, et
a3) 1 à 20 parties en poids d'une matière de charge minérale à une surface, déterminée selon BET, de 50 à 1 000 m²/g,
b) 1 à 30 parties en poids d'un polydiorganosiloxane linéaire à une viscosité de 500 Pa.s à 70 000 Pa.s à 23°C pour D=1 s⁻¹ ou d'un mélange de plusieurs polyorganosiloxanes, satisfaisant à cette condition de viscosité,
c) jusqu'à 20 parties en poids d'une résine de silicone de type MQ, qui est constituée de groupes M=R₃Si-O_{1/2} et de groupes Q=SiO_{4/2},
d) 0,05 à 10 parties en poids d'une paraffine, d'un alcool gras, d'un acide gras, d'un ester d'acide gras ou d'un alkylpolyéther à chaîne en C₅-C₃₂,
e) 1 à 20 parties en poids d'un agent hydrofugeant approprié.

2. Procédé pour la préparation du mélange selon la revendication 1, selon lequel on mélange les composants a1) et a2) et on chauffe à une température de 50 à 300°C, on ajoute le composant a3) après avoir atteint l'équilibre équilibrage/polymérisation de manière à neutraliser le catalyseur a2) et à arrêter la réaction de transposition puis on ajoute les composants restants b) à e) et on débarrasse le mélange des constituants volatils sous vide.

3. Procédé selon la revendication 2, selon lequel on choisit les composants a1) et a2) de manière à parvenir à une viscosité de 10 à 100 Pa.s à 23°C après l'équilibrage/polymérisation.

4. Procédé selon la revendication 3, selon lequel on choisit les composants a1) et a2) de manière à parvenir à une viscosité de 15 à 90 Pa.s à 23°C après l'équilibrage/polymérisation.

5. Procédé selon la revendication 2, **caractérisé en ce que** l'on incorpore une matière de charge a3) provoquant la neutralisation du siloxane a1) et du catalyseur a2).

6. Procédé selon les revendications 2 à 5, selon lequel les catalyseurs utilisés sont KOH, CsOH, un siloxanolate de Na, de K, de Cs, un hydroxyde d'ammonium, un hydroxyde de phosphonium, un acide sulfonique, l'acide sulfurique ou un autre catalyseur usuel d'équilibrage.

7. Procédé selon les revendications 2 à 6, selon lequel, après addition de a3), on incorpore une résine à motifs M et Q (résine de type MQ) à l'état de solution.

8. Procédé selon les revendications 2 à 7, selon lequel les composants b) et e) incorporés à la suite, représentent de 5 à 50 % du poids total des composants a1) à a3).

9. Procédé selon les revendications 2 à 8, selon lequel le composant e) est un polydiorganosiloxane à terminaison mono- ou di-hydroxy et à un degré de polymérisation de 2 à 10.

10. Composition pour un agent antimousse mélangé selon la revendication 1, dans laquelle ce dernier est introduit et mélangé dans un composant liquide ou à bas point de fusion et soluble à l'eau en proportions de 1 à 50 % en poids.

11. Composition selon la revendication 10, dans laquelle le composant à bas point de fusion pour l'agent antimousse mélangé selon la revendication 1 est un polyéther, et le mélange de l'antimousse mélangé selon la revendication 1 et du polyéther est mis à l'état de granulés en vue de l'application.

12. Composition selon la revendication 10, dans laquelle le composant liquide ou à bas point de fusion pour l'agent antimousse mélangé selon la revendication 1 est un phénylsiloxane, un siloxane à fonctions amino ou époxy, un fluoralkylsiloxane, une huile minérale, un polyéther-siloxane, l'urée ou un caoutchouc de silicone non réticulé ou partiellement réticulable.

13. Utilisation de l'agent antimousse mélangé ou de la composition selon les revendications 1 ou 10 à 12 dans des pâtes à papier, des produits de lavage, pour abattre les mousses dans les boues de clarification ou les bétons ou dans des opérations de teinture par jet.
